# EUROPÄISCHE PATENTANMELDUNG

(11) **EP 1 498 450 A1**
(43) Veröffentlichungstag der Anmeldung: **19.01.2005**
(21) Anmeldenummer: 04015721.6
(22) Anmeldetag: 03.07.2004
(51) Int. Cl.: C08K 9/04

(54) **Verwendung von Wachsen als Modifizierungsmittel für Füllstoffe**

(30) Priorität: 16.07.2003 DE 10332135
(71) Anmelder: Clariant GmbH, 65929 Frankfurt am Main (DE)
(72) Erfinder: Hohner, Gerd, Dr., 86368 Gersthofen (DE); Richter, Eric, Dr., 86672 Thierhaupten (DE)
(74) Vertreter: Mikulecky, Klaus, Dr.

(57) **Zusammenfassung**

Die Erfindung betrifft die Verwendung von Wachsen als Modifizierungsmittel für Füllstoffe und Kunststoffe, die einen mit Wachs beschichteten Füllstoff enthalten.

## Beschreibung

Die Erfindung betrifft die Verwendung von Wachsen als Modifizierungsmittel für Füllstoffe und thermoplastische oder duroplastische Kunststoffe, die solche Wachse enthalten.

Unter Füllstoffen werden generell pulverförmige Substanzen organischen oder anorganischen Ursprungs verstanden, welche in organischen Medien, Dispersionen oder Emulsionen dispergiert werden, um dem jeweiligen Endprodukt bestimmte Eigenschaften zu verleihen oder dessen Gestehungspreis zu senken.

Bei den Füllstoffen müssen anorganische und organische Materialien unterschieden werden. Von besonderer Bedeutung sind Calciumcarbonat, Calcium-Magnesium-Carbonat, Aluminiumsilikate, Siliciumdioxid, Magnesiumsilikate (Talkum), Bariumsulfat, Aluminium-Kalium-Natrium-Silikate, Metalle und -oxide, Aluminiumhydroxide, Ruße und Graphit, Holz- und Korkmehl, Glasfasern und Naturfasern (H.P. Schlumpf, "Filler and Reinforcements" in R. Gächter, H. Müller, Plastic Additives, 3. Ausgabe, Carl Hanser Verlag München 1993, S.525 - 591).

Füllstoffe werden in einem breiten Anwendungsfeld eingesetzt. Insbesondere sind hier die Kunststoffanwendungen, Lacke, Beschichtungsmaterialien, Papier, Baustoffe und Klebstoffe zu nennen. Je nach Anwendung sind verschiedene Eigenschaften der Füllstoffe relevant. Typische Kenngrößen sind die Brechzahl, die Bindemittelaufnahme, die spezifische Oberfläche, das Deckvermögen, der Abrieb (Verschleiß der Verarbeitungsmaschinen), der Glanz, die Kornform und die Korngrößenverteilung. Für spezielle Anforderungen wird die Oberfläche der Füllstoffe teilweise gezielt modifiziert, in dem sie einer Oberflächenbehandlung unterzogen werden. Hier ist der Stand der Technik die Beschichtung von insbesondere anorganischen Füllstoffen mit Stearinsäure, Abietinsäure und siliciumorganischen Verbindungen (E. Lang et. al. "Pigmente: Füllstoffe" in Ullmann's Encyclopädie der technischen Chemie, Band 18, 4. Auflage, Verlag Chemie, Weinheim, 1979, S.647 - 650). Für die Beschichtung von Füllstoffen bieten sich je nach Produktionsverfahren verschiedene Wege an: Bei der Mahlung von Füllstoffen können die Beschichtungsmittel hinzugefügt werden, so dass der Stoff beim Mahlprozess auf das Korn aufzieht. Bei gefällten Füllstoffen (z.B. gefälltes Calciumcarbonat) können die Beschichtungsmittel in den Fällungsprozess eingebracht (gelöst oder dispergiert) werden, hierbei lagert sich der Stoff auf die Oberfläche der gefällten Partikel an und es entsteht ein beschichteter Feststoff. Die Beschichtung kann auch durch nachgeschaltete Verfahrensschritte erfolgen. So können Füllstoffe in Mischern modifiziert werden, in dem das Additiv im Mischprozess als Feststoff, als Schmelze oder als Lösung eingebracht wird. Dabei zieht das Additiv wiederum auf der Oberfläche der Füllstoffe auf. (R. Wolf, B. Lal Kaul, "Plastics, Additives" in Ullmann's Encyclopedia of Industrial Chemistry, Vol A 20, fifth edition, VCH Verlagsgesellschaft Weinheim, 1992, S. 494-497).

Im Laufe der letzten Jahrzehnte stieg die Bedeutung der Füllstoffe in der Kunststoffverarbeitung stetig an. Während man früher im Füllstoffzusatz in erster Linie entweder eine Verbilligung des Endproduktes oder die mengenmäßige Erhöhung des Fertigartikels anstrebte, nutzte man in der Folgezeit den Einfluss der Füllstoffe auf die Verarbeitungseigenschaften bzw. die Eigenschaften der Fertigprodukte aus. Mit Hilfe von Füllstoffen konnten Eigenschaften wie die Verarbeitungsgeschwindigkeit, die Dimensionsstabilität, die Entflammbarkeit, die Abriebfestigkeit, die elektrische Durchschlagfestigkeit oder die mechanischen Eigenschaften optimiert werden. Im Bereich der Kunststoffverarbeitung werden Füllstoffe insbesondere in Polyvinylchlorid, Polyethylen, Polypropylen und auch Gummi (natürliche und synthetische unvernetzte und vernetzte, z.B. durch Vulkanisation, Elastomere) eingesetzt. Technischen Thermoplasten (Polycarbonat, Polymethylmethacrylat, Polyamid, Polystyrol, etc.) werden nur selten Füllstoffe zugesetzt.

Typische Füllstoffe weisen eine durchschnittliche Korngröße von wenigen Mikrometern auf. Damit ist eine sehr große Oberfläche verbunden. Je nach Chemie und auch in Abhängigkeit vom Herstellungsverfahren der Füllstoffe sind diese großen Oberflächen sehr aktiv. Sie verfügen über reaktive funktionelle Gruppen oder sind in der Lage, andere Stoffe in größeren Mengen zu adsorbieren. Hiervon sind insbesondere niedermolekulare Verbindungen betroffen, da sie aus entropischen Gründen bevorzugt adsorbiert werden. Im Fall von Kunststoffen ist bekannt, dass insbesondere Additive aus der Kunststoffmatrix an den Füllstoffen adsorbiert werden. Die Additive werden an der Oberfläche gebunden, dadurch verarmt die Kunststoffmatrix an diesen Stoffen und sie können dort nicht mehr ihre Aufgabe erfüllen. Dies kann sich sowohl während der Verarbeitung als auch während der Gebrauchsdauer des Kunststoffartikels negativ auswirken. Oft beobachtete Folgen sind, dass die Formmasse an Verarbeitungsstabilisatoren verarmt und sich somit nur mit entsprechender Schädigung des Polymeren verarbeiten lässt. Weiterhin ist bekannt, dass Füllstoffe dafür verantwortlich sind, dass z.B. Antioxidantien, Lichtschutzmittel und UV-Absorber "deaktiviert" werden. Hiermit ist gemeint, dass auch diese, überwiegend niedermolekularen, organischen Stoffe an der aktiven Füllstoffoberfläche gebunden werden und somit ihre Aufgabe in der Polymermatrix nicht mehr erfüllen können. Dies hat zu Folge, dass der Kunststoff während der Gebrauchszeit deutlich schneller altert und versagt. Diesem Effekt kann man entgegenwirken, in dem man die entsprechenden Additive deutlich höher dosiert, um so die erforderlichen Langzeiteigenschaften auch erfüllen zu können. Hier wird jedoch auch nur das aller Nötigste zusätzlich dosiert, da diese Additive in aller Regel sehr teure Substanzen sind. Die erwähnten oberflächenmodifizierten Füllstoffe zeigen hier nur eine geringfügig reduzierte Adsorption von Additiven aus der Kunststoffmatrix.

Überraschender Weise wurde gefunden, dass die Oberflächenbehandlung von Füllstoffen mit Wachsen anwendungstechnische Vorteile liefert. Der Begriff "Wachs" wird hier entsprechend einer Definition der Deutschen Gesellschaft für Fettwissenschaft als Sammelbezeichnung für eine Reihe natürlicher oder künstlich (teil- oder vollsynthetisch) gewonnener Stoffe verstanden, die folgende Eigenschaften aufweisen (zit. in Fette Seifen Anstrichmittel 76, Seite 135, 1974):
bei 20°C knetbar,
fest bis brüchig hart,
grob- bis feinkristallin,
durchscheinend bis opak, jedoch nicht glasartig,
oberhalb 40°C ohne Zersetzung schmelzend,
schon wenig oberhalb des Schmelzpunkts verhältnismäßig niedrigviskos,
stark temperaturabhängige Konsistenz und Löslichkeit,
unter leichtem Druck polierbar.

Die Erfindung betrifft daher die Verwendung von Wachsen als Modifizierungsmittel für Füllstoffe.

Bevorzugt handelt es sich bei den Wachsen um synthetische oder natürliche Wachse.

Bevorzugt handelt es sich bei den natürlichen Wachsen um Petroleumwachse, Montanwachse, tierische Wachse und/oder pflanzliche Wachse.

Bevorzugt handelt es sich bei den synthetischen Wachsen um Fettsäuren, Fettsäureester, Fettsäureamide, Fischer-Tropsch-Wachse, Polyolefinwachse und/oder polar modifizierte Polyolefinwachse.

Bevorzugt handelt es sich bei den natürlichen Wachsen um Montanwachse.

Montanwachse sind Esterwachse und / oder Salze von Carbonsäuren. Es handelt sich insbesondere um Umsetzungsprodukte der Montanwachssäuren mit mehrwertigen niedermolekularen Alkoholen.

Bei diesen Umsetzungsprodukten handelt es sich um Mischungen aus der Montanwachssäure, dem Alkohol, den Produkten einer partiellen Umsetzung und den Produkten einer vollständigen Umsetzung von Montanwachssäure und dem Alkohol:

Bei den Alkoholen handelt es sich insbesondere im Ethylenglykol, Glycerin, Butandiol, Pentaerythrit, Dipentaerythrit und/oder Trimethylolpropan.

Verwendung nach Anspruch 1, 2 oder 4, dadurch gekennzeichnet, dass es sich bei synthetischen Wachsen um Polyolefinwachse handelt.

Bevorzugt handelt es sich bei den Füllstoffen um anorganische und/oder organische Füllstoffe.

Bevorzugt handelt es sich bei den anorganischen Füllstoffen um Calciumcarbonat, Calcium-Magnesium-Carbonat, Aluminiumsilikate, Siliciumdioxid, Magnesiumsilikate (Talkum), Bariumsulfat, Aluminium-Kalium-Natrium-Silikate, Metalle und -oxide und/oder Aluminiumhydoxide.

Bevorzugt handelt es sich bei den organischen Füllstoffen um Ruße und Graphit, Holz- und Korkmehl, Glasfasern und Naturfasern und/oder organische Pigmente.

Bevorzugt werden die Wachse in einer Menge von 0,05 bis 10 Gew.-%, bezogen auf den Füllstoff, eingesetzt.

Besonders bevorzugt werden die Wachse in einer Menge von 0,5 bis 2,5 Gew.-%, bezogen auf den Füllstoff, eingesetzt.

Die Erfindung betrifft auch einen thermoplastischen oder duroplastischen Kunststoff, enthaltend 0,1 bis 90 Gew.-% eines mit Wachs beschichteten Füllstoffes.

Bevorzugt handelt es sich um einen thermoplastischen oder duroplastischen Kunststoff, enthaltend 1 bis 50 Gew.-% eines mit Wachs beschichteten Füllstoffes.

Bevorzugt handelt es sich bei dem thermoplastischer, vulkanisierbarer (Gummi) oder duroplastischen Kunststoff um Polyvinylchlorid, Polyethylen, Polypropylen, Naturkautschuk, Synthesekautschuk, Polycarbonat, Polymethylmethacrylat, Polyamid, Styrolpolymere und/oder auch Blends aus verschiedenen Kunststoffen handelt.

Als natürliche Wachse kommen beispielsweise Pflanzenwachse wie Carnaubaoder Candelillawachs oder Wachse tierischer Herkunft wie z.B. Schellackwachs in Frage. Geeignete teilsynthetische Wachse sind beispielsweise gebleichte, gegebenenfalls chemisch z.B. durch Veresterung und/oder durch partielle Verseifung modifizierte Montanwachse. Entsprechende Produkte sind beispielsweise in Ullmann's Encyclopedia of Industrial Chemistry, 5. Aufl., Vol. A 28, Weinheim 1996 in Kapitel 2.2, 2.3 und 3.1-3.5, S. 110 - 126 beschrieben. Weiterhin können polare oder unpolare vollsynthetische Wachse, z.B. Polyolefinwachse eingesetzt werden. Unpolare Polyolefinwachse können durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Frage, wobei die Olefine, in der Regel Ethylen, bei hohen Drucken und Temperaturen zu mehr oder minder verzweigten Wachsen umgesetzt werden; daneben Verfahren, bei denen Ethylen und/oder höhere 1-Olefine mit Hilfe metallorganischer Katalysatoren, beispielsweise Ziegler-Natta- oder Metallocenkatalysatoren zu unverzweigten oder verzweigten Wachsen polymerisiert werden. Entsprechende Methoden zur Herstellung von Olefin-Homo- und Copolymerwachsen sind beispielsweise in Ullmann's Encyclopedia of Industrial Chemistry, 5. Aufl., Vol. A 28, Weinheim 1996 in Kapitel 6.1.1/6.1.2 (Hochdruckpolymerisation), Kap. 6.1.3 (Ziegler-Natta-Polymerisation, Polymerisation mit Metallocenkatalysatoren) sowie Kap. 6.1.4 (thermischer Abbau), S. 146-154 beschrieben.

Polare Polyolefinwachse entstehen durch entsprechende Modifizierung von unpolaren Wachsen, z.B. durch Oxidation mit Luft oder durch Aufpfropfung polarer Olefinmonomere, beispielsweise α,β-ungesättigter Carbonsäuren und/oder deren Derivaten, etwa Acrylsäure oder Maleinsäureanhydrid. Ferner können polare Polyolefinwachse durch Copolymerisation von Ethylen mit polaren Comonomeren, beispielsweise Vinylacetat oder Acrylsäure hergestellt werden; weiterhin durch oxidativen Abbau von höhermolekularen, nicht wachsartigen Ethylen-Homo- und Copolymeren. Entsprechende Beispiele finden sich etwa in Ullmann's Encyclopedia of Industrial Chemistry, 5. Aufl., Vol. A 28, Weinheim 1996, Kap. 6.1.5, S. 155.

Die beschriebenen Wachse werden in sehr dünnen Schichten auf die Oberfläche von Füllstoffen aufgebracht. Um die Oberfläche vollständig zu bedecken, werden 0,1 bis 2 Gew.-% Wachs benötigt. Die Dosierung hängt von Parametern wie Korngrößenverteilung, Kornform und innerer Oberfläche ab.

Für das Aufbringen des Wachses auf die Füllstoffoberfläche gibt es verschiedene Möglichkeiten: So kann das Wachs in einem bestehenden oder neuen Verfahrensschritt als wässrige Dispersion aufgetragen werden. Weiterhin gibt es die Möglichkeit, eine Wachsschmelze zu verdüsen und so auf den Füllstoff aufzubringen. Außerdem kann eine Mischung aus Füllstoff und Wachs in einem Mischaggregat (z.B. Flügelmischer) homogenisiert werden. Wird hierbei die Temperatur bis auf den Tropfpunkt des Wachses angehoben, so zieht das Wachs auf den Füllstoff auf.

Die mit Wachsen beschichteten Füllstoffen reduzieren die Effizienz der in der Kunststoffformmasse enthaltenen Additive nicht mehr.

Dies ist überraschend, da die heute eingesetzten Beschichtungsstoffe wie Stearinsäure oder Stearate die Deaktivierung von Additiven nicht reduzieren. Durch den Einsatz von speziellen Wachsen kann erreicht werden, dass Füllstoffe die Wirksamkeit von Additiven nicht negativ beeinflussen. Die Effizienz der Additive bleibt auch beim Einsatz von Füllstoffen vollkommen erhalten. Damit ist man in der Lage, diese teuren Substanzen weiterhin sehr sparsam zu dosieren.

### Beispiele

Eine handelsübliche Kreide wurde mit unterschiedlichen Wachsen beschichtet und zusammen mit Stabilisatoren in ein handelsübliches Polypropylen-Copolymer eincompoundiert. Die Compoundmischungen wurden zu Folien verarbeitet und einer künstlichen Bewitterung ausgesetzt. Als Vergleich diente eine kommerziell erhältliche beschichtete Kreide, Material A stellt somit den Stand der Technik dar. Schmelzviskositäten wurden in Anlehnung an DIN 51810 mit einem Rotationsviskosimeter, Tropfpunkte nach DIN 51801/2, Säurezahlen nach DIN 53402 bestimmt.

**Tabelle 1:**

| Charakterisierung der verwendeten Beschichtungsmittel | | | | | |
|---|---|---|---|---|---|
| Nr. | Beschichtung | Menge [Gew.-%] | Tropfpunkt [°C] | Viskosität bei 140°C [mPa·s] | Säurezahl [mg KOH/g] |
| A | Ohne zusätzliche Wachse | - | - | - | - |
| B | Polyethylenwachs, oxidiert | 0,5 - 3 | 112 | 300 | 60 |
| C1 | Polypropylenwachs, hergestellt mittels Zieglerkatalysator, durch Pfropfung mit Maleinsäureanhydrid polar modifiziert | 0,5 - 3 | 158 | 600 | 40 |
| C2 | Polypropylenwachs, hergestellt mittels Metallocenkatalysator, durch Pfropfung mit Maleinsäureanhydrid polar modifiziert | 0,5 - 3 | 135 | 300 | 30 |
| D | Ethylen-Vinylacetat-Copolymerwachs, oxidiert | 0,5 - 3 | 102 | 2500 | 23 |
| E | Montanwachsester | 0,5 - 3 | 80 | 200 (bei 100°C) | 40 |

Beschichtungsprozess: Eine Mischung aus Kreide und Wachs wurde in einem beheizten Fluidmischer bis zum Tropfpunkt des Wachses erwärmt und dann noch für 5 min gemischt.

Compoundierprozess: 10 Gew.-% Kreide und eine Stabilisatormischung (0,05 Gew.-% Hostanox O 3, 0,1 Gew.-% Hostanox PAR 24, 0,1 Gew.-% Calciumstearat, 0,5 Gew.-% HALS) wurden mit Hilfe eines Doppelschneckenextruders in Polypropylen eincompoundiert.

Folienherstellung: Das Compound wurde mit Hilfe einer Folienblasanlage zu einem 100 µm dicken Folienschlauch verarbeitet.

Prüfung: Aus der Folie wurden Prüfstäbe für mechanische Untersuchungen ausgestanzt. Diese Prüfkörper wurden in einem Xenotest 1200 nach DIN ISO 4892 bewittert und in regelmäßigen Abständen wurden die mechanischen Eigenschaften im Zugversuch gemäß DIN EN ISO 527 bestimmt. Schadenskriterium war die Reduzierung der Reißdehnung auf 50 % des Ausgangswertes.

**Tabelle 2:**

| Einfluss der beschichteten Füllstoffe auf die Bewitterungsstabilität von Polypropylenfolien | | | |
|---|---|---|---|
| | Versagen nach | | |
| Folie mit Kreide | 0,5 % Beschichtung | 1,0 % Beschichtung | 3,0 % Beschichtung |
| A | 400 h | 400 h | 400 h |
| B | 500 h | 800 h | 850 h |
| C1 | 530 h | 850 h | 870 h |
| C2 | 550 h | 900 h | 900 h |
| D | 520 h | 850 h | 880 h |
| E | 540 h | 900 h | 920 h |

Die mechanische Prüfung der bewitterten Folien zeigt, dass die Stabilität der Folien durch die Oberflächenmodifizierung der Kreide deutlich verbessert wird.

## Patentansprüche

1. Verwendung von Wachsen als Modifizierungsmittel für Füllstoffe.

2. Verwendung nach Anspruch 1, **dadurch gekennzeichnet, dass** es sich bei den Wachsen um synthetische oder natürliche Wachse handelt.

3. Verwendung nach Anspruch 1 oder 2, **dadurch gekennzeichnet, dass** es sich bei den natürlichen Wachsen um Petroleumwachse, Montanwachse, tierische Wachse und pflanzliche Wachse handelt.

4. Verwendung nach Anspruch 1 oder 2, **dadurch gekennzeichnet, dass** es sich bei den synthetischen Wachsen um Fettsäuren, Fettsäureester, Fettsäureamide, Fischer-Tropsch-Wachse, Polyolefinwachse und polar modifizierte Polyolefinwachse handelt.

5. Verwendung nach einem oder mehreren der Ansprüche 1 bis 3, **dadurch gekennzeichnet dass** es sich bei den natürlichen Wachsen um Montanwachse handelt.

6. Verwendung nach einem oder mehreren der Ansprüche 1 bis 4, **dadurch gekennzeichnet, dass** es sich bei synthetischen Wachsen um Polyolefinwachse handelt.

7. Verwendung nach einem oder mehreren der Ansprüche 1 bis 6, **dadurch gekennzeichnet, dass** es sich bei den Füllstoffen um anorganische oder organische Füllstoffe handelt.

8. Verwendung nach Anspruch 8, **dadurch gekennzeichnet, dass** es sich bei den anorganischen Füllstoffen um Calciumcarbonat, Calcium-Magnesium-Carbonat, Aluminiumsilikate, Siliciumdioxid, Magnesiumsilikate (Talkum), Bariumsulfat, Aluminium-Kalium-Natrium-Silikate, Metalle und -oxide und/oder Aluminiumhydoxide, handelt.

9. Verwendung nach Anspruch 8, **dadurch gekennzeichnet, dass** es sich bei den organischen Füllstoffen um Ruße und Graphit, Holz- und Korkmehl, Glasfasern und Naturfasern und organische Pigmente handelt.

10. Verwendung nach einem oder mehreren der Ansprüche 1 bis 9, **dadurch gekennzeichnet, dass** die Wachse in einer Menge von 0,05 bis 10 Gew.-%, bezogen auf den Füllstoff, eingesetzt werden.

11. Verwendung nach einem oder mehreren der Ansprüche 1 bis 10, **dadurch gekennzeichnet, dass** die Wachse in einer Menge von 0,5 bis 2,5 Gew.-%, bezogen auf den Füllstoff, eingesetzt werden.

12. Thermoplastischer oder duroplastischer Kunststoff, enthaltend 0,1 bis 90 Gew.-% eines mit Wachs beschichteten Füllstoffes.

13. Thermoplastischer oder duroplastischer Kunststoff, enthaltend 1 bis 50 Gew.-% eines mit Wachs beschichteten Füllstoffes.

14. Thermoplastischer, vulkanisierbarer oder duroplastischer Kunststoff nach Anspruch 12 oder 13, **dadurch gekennzeichnet, dass** es sich bei dem Kunststoff um Polyvinylchlorid, Polyethylen, Polypropylen, Naturkautschuk, Synthesekautschuk, Polycarbonat, Polymethylmethacrylat, Polyamid, Styrolpolymere und/oder Blends hieraus handelt.
